# EUROPÄISCHE PATENTANMELDUNG

(11) **EP 1 069 017 A2**
(43) Veröffentlichungstag der Anmeldung: **17.01.2001**
(21) Anmeldenummer: 00110959.4
(22) Anmeldetag: 26.05.2000
(51) Int. Cl.: B60T 17/18, B60T 13/26, B60T 8/34

(54) **Druckmittelbetätigte Fahrzeugbremsanlage**

(30) Priorität: 12.07.1999 DE 19932470
(71) Anmelder: KNORR-BREMSE Systeme für Nutzfahrzeuge GmbH, 80809 München (DE)
(72) Erfinder: Stumpe, Werner, 70374 Stuttgart (DE)

(57) **Zusammenfassung**

Die Erfindung betrifft eine druckmittelbetätigte Fahrzeugbremsanlage (1), wobei einem ersten Bremskreis wenigstens ein Bremszylinder (34) zugeordnet ist, der über eine erste Steuerventileinrichtung (31) in Abhängigkeit von einem dem ersten Bremskreis zugeordneten Steuersignal eines Mehrkreis-Bremswertgebers (15) mit einer Druckmittelquelle (27) für den ersten Bremskreis verbindbar ist, einem zweiten Bremskreis ein erster Bremszylinder (2) und ein zweiter Bremszylinder (4) zugeordnet sind, die über ein zweite Steuerventileinrichtung (6, 8) in Abhängigkeit von einem dem zweiten Bremskreis zugeordneten Steuersignal des Mehrkreis-Bremswertgebers (15) mit einer zweiten Druckmittelquelle (14) für den zweiten Bremskreis verbindbar sind, und eine Umschaltventileinrichtung (100) vorgesehen ist, die derart steuerbar ist, daß eine von der Druckmittelquelle (14) des zweiten Bremskreises unabhängige Druckmittelquelle (12) mit wenigstens einem Bremszylinder (2, 4) des zweiten Bremskreises verbindbar ist. Die Erfindung sieht vor, daß die Umschaltventileinrichtung (100) der zweiten Steuerventileinrichtung (6, 8) zuströmseitig vorgeschaltet ist, wobei die Umschaltventileinrichtung (100) ein erstes und zweites Wechselventil (101, 103) mit einem zwischengeschalteten Relaisventil (102) umfaßt, das durch ein dem ersten Bremskreis zugeordnetes Steuersignal ansteuerbar ist.

## Beschreibung

### Stand der Technik

Die Erfindung geht aus von einer Fahrzeugbremsanlage nach der Gattung des Hauptanspruchs.

Aus der EP 0 726 190 ist eine derartige Fahrzeugbremsanlage bekannt und für ein Nutzfahrzeug vorgesehen. Dabei dient ein erster Bremskreis als pneumatisch betätigbarer Hinterachs-Bremskreis für die beiden Räder der Hinterachse und ein zweiter Bremskreis als pneumatisch betätigbarer Vorderachs-Bremskreis für die der Vorderachse. Bei Ausfall des einen Bremskreises soll der andere Bremskreis des Nutzfahrzeuges noch ausreichend verzögern. Die Bremszylinder des Hinterachs - Bremskreises sind jeweils als Kombibremszylinder ausgebildet, die über eine erste Steuerventileinrichtung in Abhängigkeit von einem dem Hinterachs-Bremskreis zugeordneten Steuersignal eines Mehrkreis-Bremswertgebers mit einem Druckluftspeicher für den Hinterachs-Bremskreis verbindbar ist. Die Bremszylinder des Vorderachs-Bremskreises sind über eine zweite Steuerventileinrichtung in Abhängigkeit von einem dem Vorderachs-Bremskreis zugeordneten Steuersignal des Mehrkreis-Bremswertgebers mit einem Druckluftspeicher für den Vorderachs-Bremskreis verbindbar. Die zweite Steuerventileinrichtung weist einen mit dem Druckluftspeicher für den Vorderachs-Bremskreis verbundenen ersten Druckeingang und einen mit einem Steuerausgang des Mehrkreis-Bremswertgebers bzw. Betriebsbremsventils verbundenen zweiten Druckeingang auf, durch welchen ein vom Betriebsbremsventil abgeleiteter Vorderachs-Steuerdruck eingesteuert wird. Die zweite Steuerventileinrichtung weist ferner mit den Bremszylindern der Vorderachse verbundene Druckausgänge auf.

Bedingt durch die dynamische Achslastverlagerung bei einem Bremsvorgang muß der größte Teil der Bremskraft von den Vorderrädern aufgebracht werden. Bei Nutzfahrzeugen mit hoher Vorderachslast und zumindest zeitweise niedriger Hinterachslast trifft dies in besonderem Maße zu, da wegen ihres kurzen Radstandes und ihrer großen Schwerpunkthöhe im Fall einer Bremsung eine hohe dynamische Achslastverlagerung auftritt. Bei Ausfall des Vorderachs-Bremskreises, beispielsweise durch eine Leckage im Vorderachs-Bremskreis, ist daher nicht mehr sichergestellt, daß die nun von den allein durch die Hinterräder gelieferte Bremskraft ausreicht, um die vom Gesetzgeber vorgeschriebene Verzögerung aufzubringen.

Aus diesem Grund ist bei der bekannten Fahrzeugbremsanlage eine zwischen der zweiten Steuerventileinrichtung und einem Bremszylinder des rechten Vorderrades angeordnete Umschaltventileinrichtung vorgesehen, die bei Ausfall des Vorderachs-Bremskreises Druckmittel aus dem vom Vorderachs-Bremskreis unabhängigen Druckluftspeicher zu diesem Bremszylinder schaltet, um dort als Ersatz für den ausgefallenen Vorderachs-Bremsdruck zu dienen. Unbefriedigend bei diesem Stand der Technik ist jedoch, daß sich durch diesen asymmetrischen Schaltungsaufbau unterschiedliche Strömungswiderstände für die Achsseiten der Vorderachse ergeben, die bei einer intakten Bremsung dort zu dynamisch ungleichen Bremsdruckverläufen führen.

### Vorteile der Erfindung

Die erfindungsgemäße druckmittelbetätigte Fahrzeugbremsanlage hat demgegenüber den Vorteil, daß sich bei einer intakten Bremsung aufgrund der Schaltung der erfindungsgemäßen Umschaltventileinrichtung auf der Zuströmseite der zweiten Steuerventileinrichtung symmetrische Strömungswiderstände für beide Achsseiten der Vorderachse ergeben, während bei einem Ausfall des Vorderachs-Bremskreises die Hilfsbremswirkung durch Umschalten auf einen vom Vorderachs-Bremskreis unabhängigen Druckluftspeicher beiden Bremszylindern der Vorderachse zuführbar ist.

Weitere vorteilhafte Weiterbildungen und Ausgestaltungen der Erfindung ergeben sich durch die in den Unteransprüchen aufgeführten Maßnahmen.

### Zeichnungen

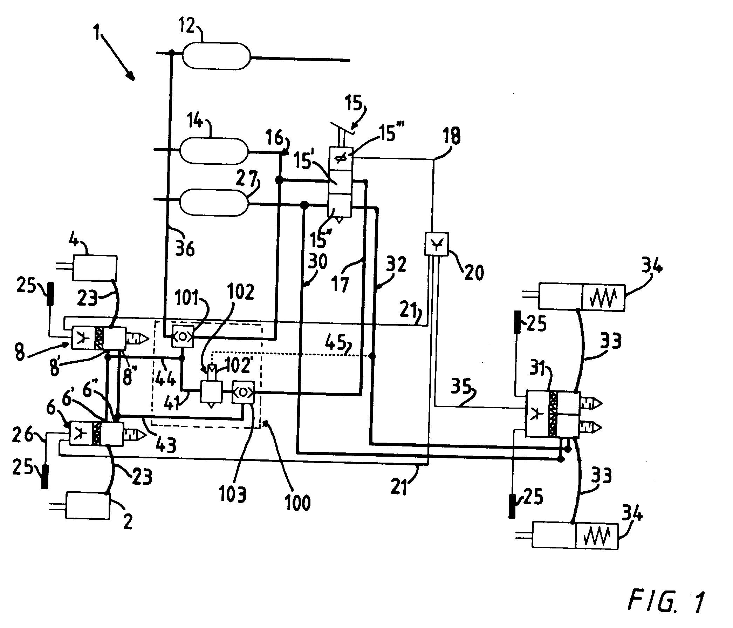

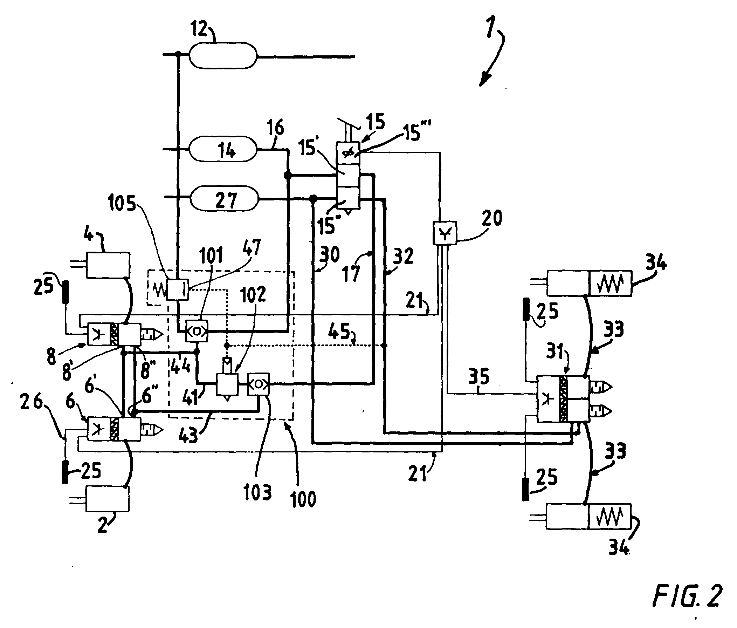

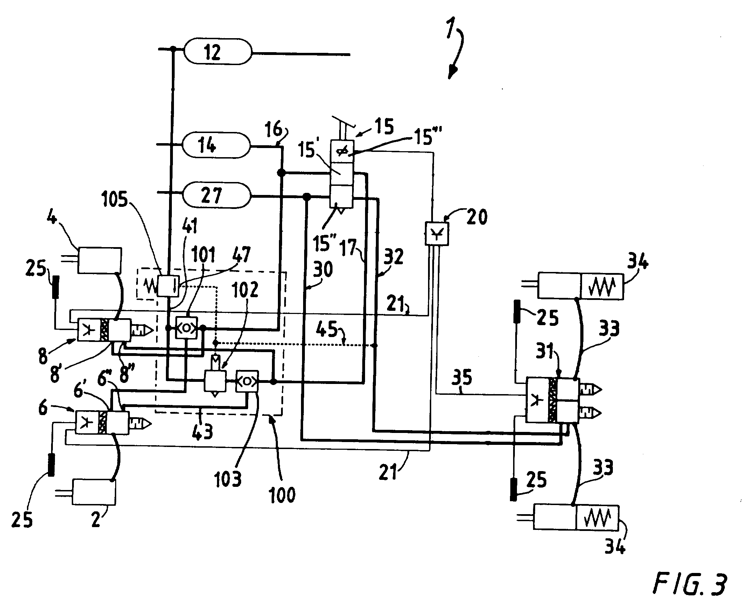

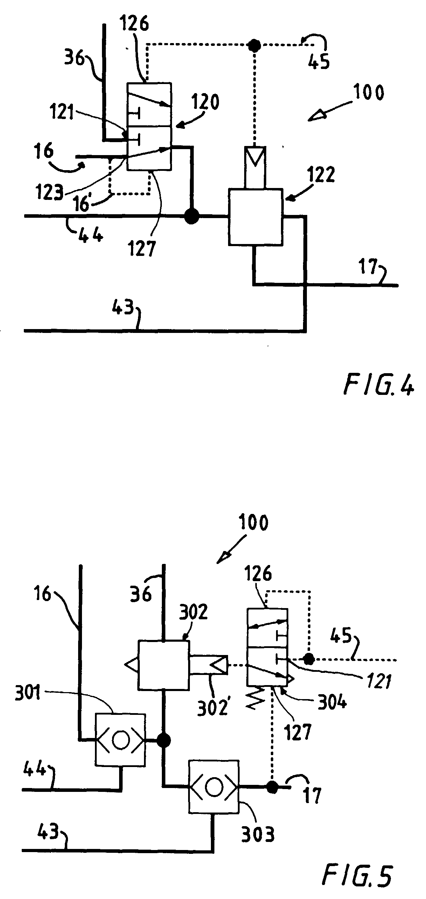

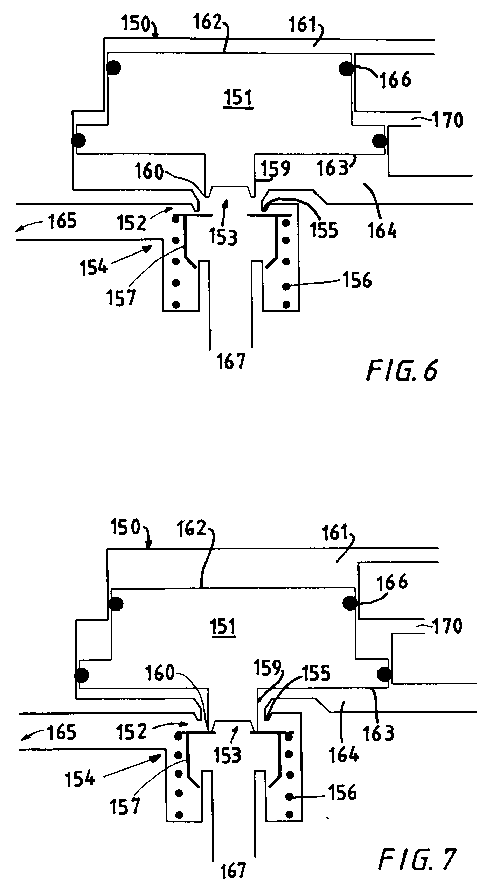

Ausführungsbeispiele der Erfindung sind in der nachfolgenden Beschreibung und in den Zeichnungen näher erläutert. Letztere zeigen in Fig. 1 einen schematischen Schaltplan einer ersten Ausführungsform der druckmittelbetätigten Fahrzeugbremsanlage mit der erfindungsgemäßen Umschaltventileinrichtung. Fig. 2 zeigt ebenfalls als schematischen Schaltplan eine zweite Ausführungsform gemäß der Erfindung. Fig. 3 zeigt eine dritte Ausführungsform. Fig. 4 und 5 zeigen in vergrößerter Darstellung jeweils weitere Ausgestaltungen der erfindungsgemäßen Umschaltventileinrichtung. Fig. 6 und 7 veranschaulichen in schematischen Schnittansichten zur erfindungsgemäßen Umschaltventileinrichtung gehörende Relaisventile, die in Fig. 4 und 5 nur als Schaltsymbole dargestellt sind.

### Beschreibung der Ausführungsbeispiele

Die in Fig. 1 in ihrer Gesamtheit mit 1 bezeichnete druckmittelbetätigte Fahrzeugbremsanlage ist eine elektronisch geregelte Bremsanlage für Nutzfahrzeuge mit vorrangigen elektro-pneumatischen Bremskreisen und mit nachrangigen pneumatischen Rückhaltkreisen als unterlegte Sicherheitsebene.

Bei der elektronisch geregelten Bremsanlage 1 sind die Vorderachsbremsen durch einen Bremszylinder 2 des linken Vorderrades und einen Bremszylinder 4 des rechten Vorderrades repräsentiert, welche jeweils von einem Einkanal-Druckregelmodul 6, 8 angesteuert sind. Die Druckregelmodule 6, 8 der Vorderachse sind mit ihren ersten Druckeingängen 6', 8' über eine Umschaltventileinrichtung 100 mit Druckluftspeichern 12 oder 14 verbindbar, während ihre zweiten Druckeingänge 6'', 8'' über einen pneumatischen Steuerausgang der Umschaltventileinrichtung 100 an die Steuerseite eines Vorderachs- und eines Hinterachskanals 15', 15'' eines Betriebsbremsventils 15 angeschlossen sind.

Der Vorderachskanal 15' des Betriebsbremsventils 15 steht eingangsseitig über eine Vorratsdruckleitung 16 mit dem Druckluftspeicher 14 der Vorderachse in Verbindung, um in Abhängigkeit von der Kraft, mit welcher der Fahrer das Steuerpedal betätigt, proportionale Steuerdrucksignale in eine Steuerdruckleitung 17 der Vorderachse einzusteuern.

Zusätzlich wird bei Betätigung des Betriebsbremsventils 15 in einem elektrischen Teil 15'' des Betriebsbremsventils 15 ein proportionales elektrisches Steuersignal erzeugt und über eine elektrische Leitung 18 an eine zentrale elektronische Steuereinheit 20 geleitet, welche mittels je einer elektrischen Steuerleitung 21 ein Druckregelmodul 6, 8 der Vorderachse ansteuert. In Abhängigkeit von den elektrischen Steuersignalen wird in den Druckregelmodulen 6, 8 der Vorderachse in bekannter Weise ein modulierter Steuerdruck erzeugt und über pneumatische Bremsdruckleitungen 23 in die Bremszylinder 2, 4 eingesteuert. Der Druckluftspeicher 14 für die Vorderachse, der elektrische Teil 15'' des Betriebsbremsventils 15, die zentrale elektronische Steuereinheit 20, die elektrischen Steuerleitungen 21, die beiden Druckregelmodule 6, 8, die Bremsdruckleitungen 23 und die Bremszylinder 2, 4 bilden zusammen einen elektro-pneumatischen Vorderachs-Bremskreis.

Die Schaltungslogik der Druckregelmodule 6, 8 behandelt die elektrischen Steuersignale des elektro-pneumatischen Vorderachs-Bremskreises vorrangig vor den über die Steuerdruckleitung 17 eingesteuerten Steuerdrucksignalen eines pneumatischen Vorderachs-Bremskreises, welcher als Rückhalt-Bremskreis eine redundante Steuerfunktion ausübt, wenn der elektro-pneumatische Vorderachs-Bremskreis gestört ist. Der elektro-pneumatische Vorderachs-Bremskreis überschneidet sich teilweise mit dem pneumatischen Vorderachs-Bremskreis, der den Druckluftspeicher 14 für die Vorderachse, den Vorderachskanal 15' des Betriebsbremsventils 15, die Steuerdruckleitung 17, die beiden Druckregelmodule 6, 8, die Bremsdruckleitungen 23 und die beiden Bremszylinder 2, 4 umfaßt.

Die beiden Druckregelmodule 6, 8 der Vorderachse ermöglichen neben der Regelung des Bremsdruckes durch integrierte ABS (Anti-Blockier-System) - Funktionen eine individuelle Anpassung des Bremsdruckes an das Drehverhalten der gebremsten Vorderräder, welches von radbezogenen Drehzahlsensoren 25 gemessen und mittels elektrischer Leitungen 26 an die Druckregelmodule 6, 8 geleitet wird.

In analoger Weise sind ein elektro-pneumatischer Hinterachs-Bremskreis und ein diesem gegenüber nachrangiger pneumatischer Hinterachs-Bremskreis aufgebaut, wobei für die Hinterachse ein eigener Druckluftspeicher 27 vorgesehen ist, welcher durch eine Vorratsdruckleitung 30 einerseits mit dem Eingang eines Hinterachskanals 15'' des Betriebsbremsventils 15 und andererseits mit einem zweikanaligen Druckregelmodul 31 der Hinterachse in Verbindung steht, wobei je ein Kanal für ein Hinterrad vorgesehen ist.

Ausgangsseitig steuert das Betriebsbremsventil 15 zum einen mittels einer Steuerdruckleitung 32 Steuerdrucksignale in das Druckregelmodul 31 der Hinterachse ein, welcher über pneumatische Bremsdruckleitungen 33 mit Kombibremszylindern 34 des rechten und linken Hinterrades in Verbindung steht. Zum anderen werden die vom Betriebsbremsventil 15 über die elektrischen Leitung 18 an die zentrale elektronische Steuereinheit 20 ausgesteuerten elektrischen Signale mittels einer elektrischen Steuerleitung 35 in das Druckregelmodul 31 der Hinterachse eingesteuert.

In Abhängigkeit der von der zentralen elektronischen Steuereinheit 20 über die elektrischen Steuerleitungen 21, 35 herangeführten elektrischen Steuersignale bzw. bei Ausfall der elektro-pneumatischen Steuerkreise in Abhängigkeit der über die pneumatischen Steuerdruckleitungen 17, 32 herangeführten Steuerdrücke werden in den Druckregelmodulen 6, 8, 31 der Vorderachse und der Hinterachse aus den über die Vorratsdruckleitungen 16, 30 herangeführten Vorratsdrücke jeweils achsweise die Bremsdrücke erzeugt, welche jeweils an einem Druckausgang eines Druckregelmoduls 6, 8, 31 anstehen und über die pneumatischen Bremsdruckleitungen 23, 33 in die nachgeschalteten Bremszylinder 2, 4 bzw. Kombibremszylinder 34 eingesteuert werden.

Die mit ihren Druckausgängen an die Druckregelmodule 6, 8 angeschlossene Umschaltventileinrichtung 100 umfaßt in einer ersten Ausführungsform ein Wechselventil 101, das eingangsseitig einerseits über die Vorratsdruckleitung 16 mit dem Druckluftspeicher 14 und andererseits über eine Vorratsdruckleitung 36 mit dem als Hilfsspeicher dienenden Druckluftspeicher 12 verbunden ist, ein Relaisventil 102, dessen Druckeingang über eine Druckleitung 41 mit einem Druckausgang des Wechselventils 101 verbunden ist, und ein weiteres Wechselventil 103, das mit einem ersten Druckeingang mit dem Druckausgang des Relaisventils 102 verbunden ist und mit einem zweiten Druckeingang an die Steuerdruckleitung 17 angeschlossen ist. Dabei ist das Wechselventil 103 mit seinem Druckausgang über eine Druckleitung 43 an die zweiten Druckeingänge 6'', 8'' der Druckregelmodule 6, 8 angeschlossen, während der Druckausgang des Wechselventils 101 über eine Druckleitung 44 mit den ersten Druckeingängen 6', 8' der Druckregelmodule 6, 8 in Verbindung steht. Das Relaisventil 102 weist eine Steuerkammer 102' auf, die über eine Verbindungsleitung 45 an die Steuerdruckleitung 32 angeschlossen ist.

Somit ergibt sich bei einer über das Betriebsbremsventil 15 eingeleiteten Bremsung für die Umschaltventileinrichtung gemäß der in Fig. 1 veranschaulichten Ausführungsform folgende Funktionsweise: Treten im Vorderachs-Bremskreis, insbesondere in der Leitung 16 keine Druckverluste auf, so steht der Vorratsdruck aus dem Druckluftspeicher 14 über die Leitung 16 an einem Druckeingang des Wechselventils 101 der Umschaltventileinrichtung 100 an, während an dem anderen Druckeingang des Wechselventils 101 der Vorratsdruck aus dem als Hilfsspeicher dienenden Druckluftspeicher 12 ansteht. Dabei ist das Wechselventil 101 derart ausgebildet, daß bei etwa gleich großen Drücken der rechtsseitige Druckeingang bevorrechtigt ist, so daß der Vorratsdruck aus dem Druckluftspeicher 14 am Druckausgang 42 des Wechselventils 101 durchgeschaltet ist und somit einerseits über die Leitung 44 an den ersten Druckeingängen 6', 8' der Druckregelmodule 6, 8 und andererseits am Druckeingang des Relaisventils 102 ansteht. Bei Betätigung des Betriebsbremsventils 15 wird die Steuerdruckleitung 32 des Hinterachs-Bremskreises mit einem Steuerdruck p_{HA} beaufschlagt, der über die davon abgezweigte Leitung 45 in die Steuerkammer 102' des Relaisventils 102 gelangt und zur Ansteuerung des Relaisventils 102 dient. Gleichzeitig wird die Steuerdruckleitung 17 des Vorderachs-Bremskreises mit einem Steuerdruck p_{VA} beaufschlagt, der somit am zweiten Druckeingang des Wechselventils 103 anliegt, während aufgrund des mit p_{HA} angesteuerten Relaisventils 102 am ersten Druckeingang des Wechselventils 103 ein vom Hinterachs-Rückhalt abhängiger Druck ansteht; da das Wechselventil 103 in gleicher Weise wie das Wechselventil 101 ausgebildet ist, indem es eine asymmetrische Gewichtung der Druckeingänge aufweist, wird der über die Steuerdruckleitung 17 zugeführte Druck p_{VA} auf den Druckeingang des Wechselventils 103 durchgeschaltet und steht als Steuerdruck an den Druckeingängen 6'', 8'' der Druckregelmodule 6, 8 an.

Bei Druckabfall im pneumatischen Vorderachs-Bremskreis während einer Bremsung, z.B. durch einen Riß oder eine Leckage in der Vorratsdruckleitung 16, sinkt der Druck am entsprechenden Druckeingang des Wechselventils 101 gegenüber dem stationären Druck aus dem Hilfsspeicher 12 an dem anderen Druckeingang des Wechselventils 101 ab, so daß nunmehr der Vorratsdruck aus dem Hilfsspeicher 12 auf den Druckausgang des Wechselventils 101 durchgeschaltet wird und somit einerseits über die Leitung 44 an den ersten Druckeingängen 6', 8' der Druckregelmodule 6, 8 und andererseits am Druckeingang des Relaisventils 102 ansteht. Das Relaisventil 102 wird seinerseits über die Steuerdruckleitung 32 des Hinterachs-Bremskreises mit einem Steuerdruck p_{HA} angesteuert, der über die abgezweigte Leitung 45 in die Steuerkammer 102' des Relaisventils 102 gelangt. Dadurch ist der zum Druckausgang des Relaisventils 102 geschaltete und an den ersten Druckeingang des Wechselventils 103 weitergeleitete Druck abhängig vom Hinterachs-Rückhaltkreis-Druck. Aufgrund des Druckabfalls im Vorderachs-Bremskreis sinkt jedoch der Steuerdruck in der zum anderen Druckeingang des Wechselventils 103 führenden Steuerdruckleitung 17 ab, so daß nunmehr der am Druckausgang des Relaisventils 102 generierte Druck auf den Druckausgang des Wechselventils 103 durchgeschaltet wird und als Steuerdruck an den Druckeingängen 6'', 8'' der Druckregelmodule 6, 8 ansteht.

In Fig. 2 ist eine zweite Ausführungsform der erfindungsgemäßen Umschaltventileinrichtung 100 veranschaulicht; gegenüber der ersten Ausführungsform unterscheidet sich die zweite Ausführungsform dadurch, daß zusätzlich zu einem ersten und zweiten Wechselventil 101, 103 und einem zwischengeschalteten Relaisventil 102 ein Druckbegrenzer 105 vorgesehen ist, welcher in die Vorratsdruckleitung 36 dem Wechselventil 101 vorgeschaltet ist und einen Steueranschluß 47 aufweist, der an einen Zweig der Steuerdruckleitung 45 angeschlossen ist. Dadurch ergibt sich in funktioneller Hinsicht der folgende vorteilhafte Aspekt: Indem der Druckbegrenzer 105 mit seinem Steueranschluß 47 mit der Steuerdruckleitung 45 des Hinterachs-Bremskreises verbunden ist, öffnet der Druckbegrenzer 105 ausschließlich bei Betätigung des Betriebsbremsventils 15 die Vorratsdruckleitung 36, wobei Druckmittel aus dem Hilfsspeicher 12 an den ersten Druckeingang des Wechselventils 101 gelangen. Dabei schaltet der Druckbegrenzer 105 in Abhängigkeit von dem durch das Betriebsbremsventil 15 ausgesteuerten Steuerdruck p_{HA} aus seiner sperrenden Ruhestellung bei einer vorbestimmten Druckhöhe.

In Fig. 3 ist eine dritte Ausführungsform der erfindungsgemäßen Umschaltventileinrichtung 100 veranschaulicht, die ein erstes und zweites Wechselventil 101, 103 mit einem zwischengeschalteten Relaisventil 102 sowie einen dem ersten Wechselventil 101 vorgeschalteten Druckbegrenzer 105 umfaßt, wobei im Unterschied zur zweiten Ausführungsform die Druckeingänge 6', 8', 6'', 8'' der Druckregelmodule 6, 8 jeweils getrennt voneinander an die Umschaltventileinrichtung 100 angeschlossen sind. Dabei ist der Hilfsspeicher 12 über die Vorratsdruckleitung 36 mit einem Druckeingang des Druckbegrenzers 105 verbunden, während dessen Druckausgang über die Leitung 41 einerseits mit einem Druckeingang des Wechselventils 101 und andererseits mit einem Druckeingang des Relaisventils 102 in Verbindung steht. Der andere Druckeingang des Wechselventils 101 ist über die Vorratsdruckleitung 16 mit dem Druckluftspeicher 14 des Vorderachs-Bremskreises verbunden. Das Relaisventil 102 ist druckausgangsseitig mit einem ersten Druckeingang des Wechselventils 103 verbunden, dessen zweiter Druckeingang an die Steuerdruckleitung 17 des Vorderachs-Bremskreises angeschlossen ist. Zur Druckansteuerung sind sowohl der Steueranschluß des Druckbegrenzers 105 als auch die Steuerkammer 102' des Relaisventils 102 gemeinsam an die Steuerdruckleitung 45 des Hinterachs-Bremskreises angeschlossen. Der erste Druckeingang 6' des Druckregelmoduls 6 ist an den Druckausgang des Wechselventils 101 angeschlossen, während der dazu korrespondierende erste Druckeingang 8' des Druckregelmoduls 8 an die Vorratsdruckleitung 16 in der Nähe des entsprechenden Druckeingangs des Wechselventils 101 angeschlossen ist. Ferner ist der zweite Druckeingang 6'' des Druckregelmoduls 6 an den Druckausgang des Wechselventils 103 angeschlossen, während der dazu korrespondierende zweite Druckeingang 8'' des Druckregelmoduls 8 mit der Steuerdruckleitung 17 verbunden ist. Da die Ansteuerung der Umschaltventileinrichtung in gleicher Weise wie bei der zweiten Ausführungsform erfolgt, ergibt sich folgende Funktionsweise für die in Fig. 3 veranschaulichte dritte Ausführungsform der Umschaltventileinrichtung 100: Treten im Vorderachs-Bremskreis keine Druckverluste auf, so steht der Vorratsdruck aus dem Druckluftspeicher druckausgangsseitig des Wechselventils 101 am ersten Druckeingang 6' des Druckregelmoduls 6 an, während am ersten Druckeingang 8' des Druckregelmoduls 8 ebenfalls der Vorratsdruck aus der Leitung 16 ansteht. Der zweite Druckeingang 6'' des Druckregelmoduls 6 wird aufgrund seiner pneumatischen Wirkverbindung mit der Steuerdruckleitung 17 des Vorderachs-Bremskreises mit dem Steuerdruck p_{VA} beaufschlagt, während der korrespondierende zweite Druckeingang 8'' des Druckregelmoduls 8 mit dem Druckausgang des Wechselventils 103 pneumatisch verbunden ist und somit ebenfalls mit dem Steuerdruck p_{VA} beaufschlagt wird.

Bei Druckabfall im pneumatischen Vorderachs-Bremskreis während einer Bremsung, sinkt der Druck aus dem Druckluftspeicher 14 am bevorrechtigten Druckeingang des Wechselventils 101, während an seinem anderen Druckeingang der durch den Druckbegrenzer 105 druckhöhenbegrenzte Druck aus dem Hilfsspeicher 12 ansteht, so daß dieser aus dem Hilfsspeicher 12 herrührende Druck auf den Ausgang des Wechselventils 101 durchgeschaltet wird und somit am ersten Druckeingang 6' des Druckregelmoduls 6 ansteht. Am korrespondierenden ersten Druckeingang 8' des Druckregelmoduls 8 steht demgegenüber aufgrund der pneumatischen Verbindung zur Vorratsdruckleitung 16 lediglich ein gegen Atmosphärendruck hin konvergierender Restdruck aus dem Druckluftspeicher 14 an. Der am Druckeingang des Relaisventils 102 anstehende druckhöhenbegrenzte Druck aus dem Hilfsspeicher 12 wird aufgrund der über die Steuerdruckleitung 45 erfolgenden Ansteuerung des Relaisventils 102 als gestufter Steuerdruck p_{HA} auf den Druckausgang des Relaisventils 102 geschaltet und beaufschlagt den korrespondierenden Druckeingang des Wechselventils 103; da am anderen Druckeingang des Wechselventils 103 aufgrund des Druckabfalls im Vorderachs-Bremskreis lediglich ein demgegenüber niedriger Restdruck ansteht, wird der gestufte Steuerdruck aus dem Hilfsspeicher 12 auf den Ausgang des Wechselventils 103 durchgeschaltet und gelangt an den zweiten Druckeingang 6'' des Druckregelmoduls 6, während am korrspondierenden zweiten Druckeingang 8'' des Druckregelmoduls 8 lediglich der Restdruck aus der Vorratsdruckleitung 16 ansteht. Der Hilfsdruck aus dem Hilfsspeicher 12 wird somit bei dieser Ausführungsform nur einem Druckregelmodul 6 zugeführt und in den korrespondierenden Bremszylinder des linken Vorderrades eingesteuert, wobei das Druckregelmodul 6 mittels des Steuerdrucks p_{HA} des Hinterachs-Rückhaltkreises gesteuert wird.

Fig. 4 zeigt ein Ausführungsbeispiel der erfindungsgemäßen Umschaltventileinrichtung 100, wobei einzelne Ventilfunktionen zusammengefaßt sind. Dabei ist der vorgeschaltete Druckbegrenzer 105 und das Wechselventil 101 als pneumatisch geschaltetes 3/2-Wegeventil 120 sowie das Relaisventil 102 und das Wechselventil 103 als kombiniertes Relaisventil 122 ausgebildet. An einen ersten Eingang 121 des 3/2 - Wegeventils 120 ist die Vorratsdruckleitung 36 des Druckluftspeichers 12 angeschlossen, während ein zweiter Eingang 123 des Ventils 120 mit der zum Hilfsspeicher 14 führenden Vorratsdruckleitung 16 verbunden. Desweiteren ist das 3/2-Wegeventil 120 mit einem ersten Steuereingang 126 an die die pneumatischen Steuerdrucksignale des Hinterachs - Bremskreises führende Verbindungsleitung 45 angeschlossen und steht mit einem zweiten Steuereingang 127 über eine von der Vorratsdruckleitung 16 abgezweigte Leitung 16' in Verbindung. In seiner Ruhestellung sperrt das 3/2-Wegeventil 120 die Vorratsdruckleitung 36 ab und verbindet gleichzeitig die Vorratsdruckleitung 16 mit seinem Ausgang, während in seiner zweiten Stellung die Vorratsdruckleitung 16 abgesperrt ist und die Vorratsdruckleitung 36 mit dem Ausgang verbunden ist. Dieser Ausgang ist über die Leitung 44 einerseits mit einem Druckeingang des kombinierten Relaisventils 122 verbunden und andererseits an die ersten Druckeingänge 6', 8' der Druckregelmodule 6, 8 angeschlossen. Ein zweiter Druckeingang des Relaisventils 122 ist an die Steuerdruckleitung 17 des Vorderachs-Bremskreises angeschlossen, während der Ausgang des Relaisventils 122 über die Leitung 43 mit den zweiten Druckeingängen der Druckregelmodule 6, 8 verbunden ist. Das kombinierte Relaisventil 122 übernimmt somit die bereits beschriebenen Funktionen des Relaisventils 102 und Wechselventils 103 gemäß der zweiten Ausführungsform, wobei die Ansteuerung des kombinierten Relaisventils 122 ebenfalls über die Steuerdruckleitung 45 des Hinterachs-Bremskreises erfolgt.

Bei intaktem Vorderachs-Bremskreis bleibt das 3/2-Wegeventil 120 in seiner Ruhestellung, so daß an den ersten Druckeingängen 6', 8' der Druckregelmodule 6, 8 der Druck aus dem Druckluftspeicher 14 ansteht, während an die zweiten Druckeingängen 6'', 8'' der über die Steuerdruckleitung 17 zugeführte Steuerdruck p_{VA} gelangt. Bei Druckabfall im pneumatischen Vorderachs-Bremskreis sinkt sowohl der Druck an Eingang 123 des 3/2-Wegeventils 120 als auch an dessen Steuereingang 127 ab, so daß das 3/2-Wegeventil 120 bei einer Bremsung infolge des Druckes p_{HA} in der Steuerdruckleitung 45 in seine zweite Stellung schaltet, wobei nunmehr an dessen Ausgang und somit an den ersten Druckeingängen 6', 8' der Druckregelmodule 6, 8 der Hilfsdruck aus dem Hilfsspeicher 12 ansteht. Da der Druck in der Steuerdruckleitung 17 des Vorderachs-Rückhaltkreises ebenfalls absinkt, schaltet das kombinierte Relaisventil 122 den Hilfsdruck aus dem Hilfsspeicher 12 als Funktion des ausgesteuerten Hinterachs-Rückhalt-Steuerdrucks p_{HA} auf die zweiten Druckeingänge 6'', 8'' der Druckregelmodule durch.

Fig. 5 zeigt ein weiteres Ausführungsbeispiel der erfindungsgemäßen Umschaltventileinrichtung 100, das ein erstes und zweites Wechselventil 301 und 303, ein Relaisventil 302 sowie ein 3/2-Wegeventil 304 umfaßt. An einen ersten Eingang des ersten Wechselventils 301 ist die Vorratsdruckleitung 16 des Druckluftspeichers 14 angeschlossen, während die zum Hilfsspeicher 12 führende Vorratsdruckleitung 36 mit dem Eingang des Relaisventils 302 in Verbindung steht, wobei dessen Ausgang einerseits mit dem anderen Eingang des ersten Wechselventils 301 und andererseits mit einem ersten Eingang des zweiten Wechselventils 303 verbunden ist. An den anderen Druckeingang des zweiten Wechselventils 303 ist die Steuerdruckleitung 17 des Vorderachs-Bremskreises angeschlossen, während der Druckausgang des ersten Wechselventils 301 mit den ersten Druckeingängen 6', 8' der Druckregelmodule 6, 8 und der Druckausgang des zweiten Wechselventils 303 mit den zweiten Druckeingängen 6'', 8'' verbunden ist. Die Ansteuerung erfolgt dabei über die Steuerdruckleitung 45 des Hinterachs-Rückhaltkreises, welche einerseits an einen ersten Eingang des 3/2-Wechselventils 304 und andererseits an dessen ersten Steuereingang 126 angeschlossen ist, während dessen zweiter Steuereingang 127 mit der Steuerdruckleitung 17 verbunden ist. Mit seinem zweiten Druckeingang ist das 3/2-Wegeventil 304 mit der Atmosphäre verbunden, während sein Druckausgang an die Steuerkammer 302' des Relaisventils 302 angeschlossen ist. In seiner Ruhestellung sperrt das 3/2-Wegeventil 304 den ersten Eingang 121 zur Steuerdruckleitung 45 ab und verbindet gleichzeitig seinen Ausgang mit der Atmosphäre, so daß die Steuerkammer 302' entlüftet ist. Demgegenüber ist in der zweiten Schaltstellung des 3/2-Wegeventils 304 dessen zweiter Eingang abgesperrt und gleichzeitig die Steuerdruckleitung 45 auf den Ausgang und somit auf die Steuerkammer 302' des Relaisventils 302 durchgeschaltet.

Bei intaktem Vorderachs-Bremskreis bleibt das 3/2-Wegeventil 304 in seiner Ruhestellung, so daß das Relaisventil 302 aufgrund der Verbindung der Steuerkammer 302' mit der Atmosphäre ohne Steuerdruck ist und die Vorratsdruckleitung 36 absperrt, wobei die damit korrespondierenden Druckeingänge des ersten und zweiten Wechselventils 301, 303 ebenfalls abgesperrt sind. Dadurch wird der stationäre Druck aus dem Druckluftspeicher 14 auf den Ausgang des ersten Wechselventils 301 durchgeschaltet und gelangt über die Leitung 44 auf die ersten Druckeingänge 6', 8' der Druckregelmodule 6, 8, während auf den Ausgang des zweiten Wechselventils 303 der Steuerdruck p_{VA} des Vorderachs-Rückhaltkreises durchgeschaltet wird und über die Leitung 43 auf die zweiten Druckeingänge 6'', 8'' gelangt.

Bei Druckabfall im Vorderachs-Bremskreis sinkt der Druck sowohl in der Vorratsdruckleitung 16 als auch in der Steuerdruckleitung 17 ab, so daß der Steuerdruck p_{VA} am Steuereingang 127 niedriger als der Steuerdruck p_{HA} am Steuereingang 126 des 3/2-Wegeventils ist. Dadurch schaltet das 3/2-Wegeventil 304 in seine zweite Stellung, wobei der Steuerdruck p_{HA} des Hinterachs-Rückhaltkreises in die Steuerkammer 302' des Relaisventils 302 durchgeschaltet wird und das Relaisventil 302 betätigt. Aufgrund der Betätigung des Relaisventils 302 gelangt Druck aus dem Hilfsspeicher 12 als Funktion von p_{HA} über die nunmehr geschaltete Vorratsdruckleitung 36 an die korrespondierenden Druckeingänge des ersten und zweiten Wechselventils 301 und 303. Am Ausgang sowohl des ersten als auch des zweiten Wechselventils 301, 303 und damit an den ersten und zweiten Druckeingängen 6', 8' und 6'', 8'' der Druckregelmodule 6, 8 steht somit der Hilfsdruck aus dem Hilfsspeicher 12 als Funktion von p_{HA} an. Somit wird der Rückhaltkreis-Druck der Hinterachse erst dann zur Steuerkammer 302' des Relaisventils 302 gelassen, wenn der Rückhaltkreis der Vorderachse einen deutlich geringeren Druck aufweist.

Fig. 6 zeigt eine Ausführungsform des in Fig. 4 dargestellten Relaisventils in stark schematisierter Weise. Das Relaisventil hat ein Ventilgehäuse 150, innerhalb dessen ein Relaiskolben 151 längsbeweglich angeordnet ist, um ein aus einem Einlaßventil 152 und einem Auslaßventil 153 bestehendes Doppelsitzventil 154 zu betätigen. Das Einlaßventil 152 beinhaltet einen am Ventilgehäuse 150 angeordneten äußeren Ventilsitz 155, gegen welchen mittels einer Ventilfeder 156 ein Ventilkörper 157 vorgespannt ist. Der Relaiskolben 151 hat einen endseitigen Kolbenzapfen 159, dessen Rand als ringförmiger, innerer Ventilsitz 160 ausgebildet ist, welcher zusammen mit dem Ventilkörper 157 das Auslaßventil 153 das Doppelsitzventils 154 bildet. Eine erste Steuerkammer 161 des Relaisventils ist durch eine obere Wirkfläche 162 des Relaiskolbens 151 und durch das Ventilgehäuse 150 begrenzt. Von der unteren Wirkfläche 163 des Relaiskolbens 151 und einem Zwischenboden des Ventilgehäuses 150 wird eine als Arbeitskammer dienende zweite Steuerkammer 164 begrenzt. Ein Einlaß 165 des Relaisventils umschließt das Doppelsitzventil 154. Dichtungen 166 zwischen dem Relaiskolben 151 und dem Ventilgehäuse 150 dichten die Steuerkammern 161, 164 gegeneinander ab.

Dabei entspricht der Einlaß 165 dem Druckeingang des in Fig. 4 dargestellten Relaisventil 122, an den der Ausgang des 3/2-Wegeventils 120 über die Leitung 44 angeschlossen ist. Ferner ist die erste Steuerkammer 161 an die Steuerdruckleitung 45 des Hinterachs-Rückhaltkreises angeschlossen, während die zweite Steuerkammer 164 an die zu den Druckregelmodulen 6, 8 führende Steuerdruckleitung 43 angeschlossen ist. Zwischen der ersten und zweiten Steuerkammer 161, 164 ist ein Zwischenentlüftungsauslaß 170 zur Atmosphäre hin vorgesehen. Ein bodenseitiger Auslaß 167 ist an die Steuerdruckleitung 17 des Vorderachs-Rückhaltkreises angeschlossen.

Bei intaktem Vorderachs-Bremskreis wirkt gemäß Fig. 6 in der ersten Steuerkammer 161 des Relaisventils 122 der Druck p_{HA} und in der zweiten Steuerkammer 164 der Druck p_{VA}. Die obere Wirkfläche 162 des Relaiskolbens 151 ist kleiner ausgebildet als dessen untere Wirkfläche 163, so daß unter Annahme ungefähr gleich großer Drücke p_{HA} und p_{VA} am Relaiskolben 151 eine resultierende Kraft nach oben wirkt, wodurch dieser nach oben gedrängt und der innere Ventilsitz 160 vom Ventilkörper 157 abgehoben ist. In dieser Brems-Grundstellung des Relaiskolbens 122 ist das Auslaßventil geöffnet und das Einlaßventil 152 gesperrt, so daß der am Auslaßventil 167 anstehende Druck p_{VA} am Ausgang zu den Steuereingängen der Druckregelmodule 6, 8 als Funktion des Hinterachs-Rückhaltkreises ansteht.

Bei Druckabfall im pneumatischen Vorderachs-Bremskreis erfährt der Relaiskolben 151 aufgrund des nunmehr höheren Drucks p_{HA} im Vergleich zu p_{VA} eine resultierende Kraft nach unten, wodurch der Kolbenzapfen 159 den inneren Ventilsitz 160 auf den Ventilkörper 157 drückt und das Auslaßventil 167 schließt. Gleichzeitig wird der Ventilkörper 157 vom äußeren Ventilsitz 155 abgehoben und hierdurch das Einlaßventil 152 geöffnet. In dieser in Fig. 7 veranschaulichten Stellung des Relaisventils 122 steht der am Einlaßventil anstehende Vorratsdruck am Ausgang zu den Steuereingängen der Druckregelmodule 6, 8 als Funktion des Hinterachs-Rückhaltkreises an.

Im übrigen läßt sich mit dem in Fig. 6 und 7 veranschaulichten Relaisventil durch eine modifizierte äußere Beschaltung der Druckanschlüsse das in Fig. 5 dargestellte Relaisventil realisieren. Dazu ist der Auslaß 167 des Doppelsitzventils mit der Atmosphäre verbunden, während der Einlaß 165 mit der Vorratsdruckleitung, die erste Steuerkammer 161 mit p_{HA} und der Ausgang der zweiten Steuerkammer 164 mit den Druckeingängen der Druckregelmodule 6, 8 verbunden sind. Dadurch steht an der oberen Wirkfläche 162 des Relaiskolbens der Steuerdruck p_{HA} und an der unteren Wirkfläche 163 Atmosphärendruck an, so daß das Auslaßventil bei Unterschreiten/Überschreiten einer durch den Restdruck und die untere Wirkfläche bestimmten Druckschwelle einen Druckausgleich liefert. Im Unterschied zum Stand der Technik, bei dem eine aufgrund dynamischer Steuerdruckschwankungen hervorgerufene kurzzeitige Umschaltung in die Notbremsfunktionsstellung irreversibel ist, kehrt das zur Erfindung gehörende Relaisventil bei dynamischenSteuerdruckschwankungen aufgrund des Druckausgleichs in die Ausgangsstellung zurück.

Den verschiedenen Ausführungsformen ist gemeinsam, daß die zur Erfindung gehörenden Wechselventile 101, 103 sowie 301, 303 gleichartig ausgebildet sind, wobei vorzugsweise der jeweils erste Druckeingang um ein vorbestimmtes Druckmaß Δp gegenüber dem zweiten Druckeingang bevorrechtigt ist.

## Patentansprüche

1. Druckmittelbetätigte Fahrzeugbremsanlage mit wenigstens einem ersten Bremskreis und einem zweiten Bremskreis mit folgenden Merkmalen:
a) Dem ersten Bremskreis ist wenigstens ein Bremszylinder zugeordnet, der über eine erste Steuerventileinrichtung in Abhängigkeit von einem dem ersten Bremskreis zugeordneten Steuersignal eines Mehrkreis-Bremswertgebers mit einer Druckmittelquelle für den ersten Bremskreis verbindbar ist,
b) dem zweiten Bremskreis sind ein erster Bremszylinder und ein zweiter Bremszylinder zugeordnet, die über eine zweite Steuerventileinrichtung in Abhängigkeit von einem dem zweiten Bremskreis zugeordneten Steuersignal des Mehrkreis-Bremswertgebers mit einer zweiten Druckmittelquelle für den zweiten Bremskreis verbindbar sind,
c) eine Umschaltventileinrichtung ist vorgesehen, die derart steuerbar ist, daß eine von der Druckmittelquelle des zweiten Bremskreises unabhängige Druckmittelquelle mit wenigstens einem Bremszylinder des zweiten Bremskreises verbindbar ist, **dadurch gekennzeichnet,** daß die Umschaltventileinrichtung (100) der zweiten Steuerventileinrichtung (6, 8) zuströmseitig vorgeschaltet ist.

2. Druckmittelbetätigte Fahrzeugbremsanlage nach Anspruch 1, **dadurch gekennzeichnet**, daß die Umschaltventileinrichtung (100) ein erstes und zweites Wechselventil (101, 103) sowie ein zwischengeschaltetes Relaisventil (102) umfaßt, wobei ein erster Druckeingang des ersten Wechselventils (101) mit der Druckmittelquelle (14) des zweiten Bremskreises in Verbindung steht, ein zweiter Druckeingang des ersten Wechselventils (101) mit der von der Druckmittelquelle (14) des zweiten Bremskreises unabhängigen Druckmittelquelle (12) verbindbar ist, ein Druckausgang des ersten Wechselventils (101) einerseits mit einem Druckeingang des Relaisventils (102) und andererseits mit wenigstens einem Druckeingang (6', 8') der zweiten Steuerventileinrichtung (6, 8) verbunden ist, ein erster Druckeingang des zweiten Wechselventils (103) durch ein dem zweiten Bremskreis zugeordnetes Steuersignal ansteuerbar und ein zweiter Druckeingang mit einem Druckausgang des Relaisventils (102) verbunden ist, wobei das Relaisventil (102) durch ein dem ersten Bremskreis zugeordnetes Steuersignal ansteuerbar und ein Druckausgang des zweiten Wechselventils (103) mit wenigstens einem Druckeingang (6'', 8'') der zweiten Steuerventileinrichtung (6, 8) verbunden ist.

3. Druckmittelbetätigte Fahrzeugbremsanlage nach Anspruch 1, **dadurch gekennzeichnet**, daß die Umschaltventileinrichtung (100) ein erstes und zweites Wechselventil (101, 103) sowie ein zwischengeschaltetes Relaisventil (102) umfaßt, wobei ein erster Druckeingang des ersten Wechselventils (101) mit der Druckmittelquelle (14) des zweiten Bremskreises in Verbindung steht,
ein zweiter mit einem Druckeingang des Relaisventils (102) verbundener Druckeingang des ersten Wechselventils (101) mit der von der Druckmittelquelle (14) des zweiten Bremskreises unabhängigen Druckmittelquelle (12) verbindbar ist,
ein Druckausgang des ersten Wechselventils (101) mit wenigstens einem Druckeingang (6') der zweiten Steuerventileinrichtung (6, 8) verbunden ist, während ein korrespondierender Druckeingang (8') der zweiten Steuerventileinrichtung (6, 8) mit der Druckmittelquelle (14) verbunden ist,
ein erster Druckeingang des zweiten Wechselventils (103) durch ein dem zweiten Bremskreis zugeordnetes Steuersignal ansteuerbar und ein zweiter Druckeingang mit einem Druckausgang des Relaisventils (102) verbunden ist, wobei das Relaisventil (102) durch ein dem ersten Bremskreis zugeordnetes Steuersignal ansteuerbar und ein Druckausgang des zweiten Wechselventils (103) mit einem Druckeingang (6'') der zweiten Steuerventileinrichtung (6, 8) verbunden ist, während ein korrespondierender Druckeingang (8'') mit dem ersten Druckeingang des zweiten Wechselventils (103) verbunden ist.

4. Druckmittelbetätigte Fahrzeugbremsanlage nach Anspruch 2 oder 3, **dadurch gekennzeichnet**, daß dem ersten Wechselventil (101) der Umschaltventileinrichtung (100) wenigstens ein Zuschaltventil (105) vorgeschaltet ist, das mit seinem Eingang zuströmseitig mit der unabhängigen Druckmittelquelle (12) und mit seinem Ausgang abströmseitig mit dem zweiten Druckeingang des Wechselventils (101) in Verbindung steht.

5. Druckmittelbetätigte Fahrzeugbremsanlage nach Anspruch 4, **dadurch gekennzeichnet**, daß das Zuschaltventil (105) durch ein dem ersten Bremskreis zugeordnetes Steuersignal ansteuerbar ist.

6. Druckmittelbetätigte Fahrzeugbremsanlage nach Anspruch 4 oder 5, **dadurch gekennzeichnet,** daß das Zuschaltventil (105) als Druckbegrenzer ausgebildet ist.

7. Druckmittelbetätigte Fahrzeugbremsanlage nach einem der Ansprüche 4 bis 6, **dadurch gekennzeichnet**, daß das Zuschaltventil (105) und das Wechselventil (101) der Umschaltventileinrichtung (100) als ein 3/2-Wegeventil (120) ausgebildet sind, wobei ein Druckeingang mit der Druckmittelquelle (12) und ein anderer Druckeingang mit der Druckmittelquelle (14) in Verbindung steht und in seiner Ruhestellung seinen Ausgang mit der Druckmittelquelle (14) und in seiner zweiten Stellung seinen Ausgang mit der unabhängigen Druckmittelquelle (12) verbindet,
daß das Relaisventil (102) und das Wechselventil (103) als ein kombiniertes Relaisventil (122) ausgebildet sind, wobei ein Druckeingang des kombinierten Relaisventils (122) mit dem Ausgang des 3/2-Wegeventils (120) verbunden ist, ein zweiter Druckeingang des kombinierten Relaisventils (122) von einem Steuersignal des zweiten Bremskreises ansteuerbar ist, während ein Steuereingang des kombinierten Relaisventils (122) von einem Steuersignal des ersten Bremskreises ansteuerbar ist, und der Ausgang des 3/2-Wegeventils (120) mit ersten Druckeingängen (6', 8') der zweiten Steuerventileinrichtung (6, 8) in Verbindung steht.

8. Druckmittelbetätigte Fahrzeugbremsanlage nach Anspruch 7, **dadurch gekennzeichnet**, daß an einem ersten Steuereingang des 3/2-Wegeventils (120) das dem ersten Bremskreis zugeordnete Steuersignal ansteht und ein zweiter Steuereingang mit der Druckmittelquelle (14) in Verbindung steht.

9. Druckmittelbetätigte Fahrzeugbremsanlage nach Anspruch 1, **dadurch gekennzeichnet**, daß die Umschaltventileinrichtung (100) ein erstes und zweites Wechselventil (301, 303) sowie ein Relaisventil (302) umfaßt, daß ein Druckeingang des ersten Wechselventils (301) mit der Druckmittelquelle (14) des zweiten Bremskreises verbunden ist und ein anderer mit einem Druckeingang des zweiten Wechselventils (303) verbundener Druckeingang des Wechselventils (301) über ein zwischengeschaltetes Relaisventil (302) mit der unabhängigen Druckmittelquelle (12) verbindbar ist, wobei ein anderer Druckeingang des zweiten Wechselventils (303) durch ein dem zweiten Bremskreis zugeordnetes Steuersignal ansteuerbar ist, und daß ein 3/2-Wegeventil (304) vorgesehen ist, an dessen Druckeingang ein dem ersten Bremskreis zugeordnetes Steuersignal ansteht und dessen Druckausgang mit einer Steuerkammer des Relaisventils (302) verbunden ist.

10. Druckmittelbetätigte Fahrzeugbremsanlage nach Anspruch 9, **dadurch gekennzeichnet**, daß das 3/2-Wegeventil (304) in seiner Ruhestellung die Steuerkammer des Relaisventils (302) mit der Atmosphäre und in seiner zweiten Stellung mit dem dem ersten Bremskreis zugeordneten und an seinem Druckeingang anstehenden Steuersignal verbindet.

11. Druckmittelbetätigte Fahrzeugbremsanlage nach Anspruch 10, **dadurch gekennzeichnet**, daß an einem ersten Steuereingang des 3/2-Wegeventils (304) das dem ersten Bremskreis zugeordnete Steuersignal ansteht und an einem zweiten Steuereingang das dem zweiten Bremskreis zugeordnete Steuersignal ansteht.

12. Druckmittelbetätigte Fahrzeugbremsanlage nach einem der Ansprüche 2 bis 11, **dadurch gekennzeichnet**, daß die von der Umschaltventileinrichtung (100) umfaßten Wechselventile (101, 103; 301, 303) derart ausgebildet sind, daß die jeweils ersten Druckeingänge pneumatisch bevorrechtigt sind.
